# EUROPEAN PATENT SPECIFICATION

(11) **EP 1 672 808 B1**
(45) Date of publication and mention of the grant of the patent: **09.07.2008**
(21) Application number: 04388093.9
(22) Date of filing: 20.12.2004
(51) Int. Cl.: H04B 1/707

(54) **Selecting peak delay values for a RAKE receiver**
Verzögerungswertauswahl für einen RAKE-Empfänger
Sélection des valeurs de retard pour un récepteur du type RAKE

(43) Date of publication of application: 21.06.2006
(73) Proprietor: Telefonaktiebolaget L M Ericsson (Publ), 164 83 Stockholm (SE)
(72) Inventor: Wang, Xiaohui, 247 35 Södra Sandby (SE)
(74) Representative: Boesen, Johnny Peder

(56) References cited:
- EP-A- 1 154 585
- EP-A- 1 482 650
- WO-A-20/04025859

## Description

### Technical Field of the Invention

The invention relates to a method of receiving digital data symbols sent from a transmitter through a transmission channel of a communications network, in which individual multipath components of a transmitted data symbol are received with individual delays, and wherein received signals are processed by a RAKE unit having a number of fingers. The invention further relates to a receiver for coded digital data symbols, and to a corresponding computer program and computer readable medium.

### Description of Related Art

In wireless communications systems the physical channel between a transmitter and a receiver is typically formed by a radio link. As an example, the transmitter could be a base station, and the receiver could be a mobile station, or vice versa. In most cases the transmit antenna is not narrowly focused towards the receiver. This means that the transmitted signals may propagate over multiple paths. In addition to a possible direct path from the transmitter to the receiver, many other propagation paths caused by reflections from objects in the surroundings exist. Thus, the receiver may receive multiple instances of the same signal at different times, i.e. with different delays, because different portions of the signal are reflected from various objects, such as buildings, moving vehicles or landscape details.

These different portions of the signal are a cause of interference in the receiver. Depending on the time resolution of the transmission system and the instantaneous phase relationship, portions with similar propagation distances combine at the receiver and form a distinct multipath component. The effect of the combining depends on the instantaneous relationship of the carrier wavelength and distance differences, and it may thus for a given multipath component be either enhancing or destructive. In case of destructive interference, the combining leads to significant decrease of the magnitude, or fading, of the path gain for that path. Thus the gain of a true path may temporarily decrease considerably due to fading.

Many transmission systems try to reduce the effect of multipath propagation and fading by using receivers that combine the data symbol energy from all multipath components. In Code Division Multiple Access (CDMA) and Wideband Code Division Multiple Access (WCDMA) systems the energy of the different received portions of the signal may be utilized in the receiver by using a so-called RAKE receiver.

In these systems spreading and despreading are used. Data are transmitted from the transmitter side using a spread spectrum modulation technique wherein the data are scattered across a wide range of frequencies. Each channel is assigned a unique spreading code that is used to spread the data across the frequency range. The spreading code is a pseudo-random noise code and is composed of e.g. a binary sequence of 1's and 0's, called "chips", which are distributed in a pseudo-random manner and have noise-like properties. The number of chips used to spread one data bit, i.e. chips/bit, may vary, and it depends, at least in part, on the data rate of the channel and the chip rate of the system.

In the receiver the received signal must be despread and demodulated with the same spreading code using the same chip rate to recover the transmitted data. Furthermore, the timing of the demodulation must be synchronized, i.e. the despreading code must be applied to the received signal at the correct instant in time, which can be difficult due to the multipath effects mentioned above. The performance of a CDMA receiver is improved by using a RAKE receiver, where each multipath component is assigned a despreader whose reference copy of the spreading code is delayed equally to the path delay of the corresponding multipath component. The outputs of the despreaders, i.e. the fingers of the RAKE receiver, are then coherently combined to produce a symbol estimate.

Thus the RAKE receiver requires knowledge of the multipath delays and the values of the channel impulse response for all paths. To achieve the best possible signal-to-noise ratio (SNR) at the output of the RAKE combiner, the signal energy from as many physical paths as possible should be collected. The changing delays of all known multipath components should be tracked, and new paths should be discovered quickly after they appear. This is typically achieved by using a path searcher unit with an observation window shorter than the full search area. In a practical delay estimation system the path searcher unit is used periodically to re-scan the delay range with the purpose of detecting new paths.

To overcome the effect of fading and the fact that also noise peaks may occur in the received signal, the instantaneous delay profile may be filtered or averaged over several path searching events, i.e. typically over several frames of the incoming signal. Although the paths under fading may not appear as strong peaks in the instantaneous power profile, their filtered values over a number of path searching events should be well above the noise floor, and thus they will be detected by the path searcher. On the opposite, there may be some noise peaks in the instantaneous power profile, but their filtered values should be smothered out due to the nature of randomness.

Document EP-A1-1.482.650 discloses a RAKE receiver of the prior art in which it is decided which delay estimates most likely correspond to actual physical paths.

There are, however, time-critical processes in the CDMA systems, to which the filtering technique is not applicable. To this category belongs paging, i.e. the process of seeking a user equipment or mobile phone from e.g. a base station. In order to save the power of the user equipment, paging is managed in a discontinuous way so that the radio frequency unit of the user equipment needs to wake up from sleeping only from time to time. During the short wake up period, the receiver has to find the delays of the paths and perform e.g. automatic frequency corrections and paging indicator detections. If a paging Indication is detected for a receiver, it will decode associated information. Since the time intervals between the radio frequency wake up events are rather long, the power profiles of the multipaths measured during individual wake up periods are typically not correlated due to their dynamic characteristics or frequency drift, and hence the delay profiles for individual wake up periods can not be filtered to avoid the effect of fading.

Thus during the delay detections only the instantaneous power profiles can be considered, so that real paths under fading may not be detected, while noise peaks may be interpreted as paths and used by the RAKE and channel estimators to do the paging indicator detections and information decoding. Such a loss of true paths and involvement of noise peaks lead to degradations of the paging performance.

Therefore, it is an object of the invention to provide a method of detecting multipath components, which can improve the ability of selecting the true path delays, even when they are under fading and suppressing strong noise peaks also in time critical processes, where filtering of the delay profiles over several frames is not possible. It will be understood, though, that the principles of the invention are also applicable to other situations, when filtering over several frames is possible but not desirable.

### Summary

According to the invention the object is achieved in that the method comprises the steps of calculating a plurality of delay profile from a respective plurality of sets of received pilot signals and for each of the plurality of delay profiles determining delay values for peaks detected in the delay profile; pre-selecting a number of peak delay values among the peak delay values determined for at least one of said plurality of delay profiles, said number of pre-selected delay values being larger than the number of fingers for said RAKE unit; ranking the pre-selected peak delay values in dependence of whether they are determined for more than one of said plurality of delay profiles, so that for at least some of the peak delay values a higher rank is given to peak delay values that are determined for more than one of said plurality of delay profiles than to peak delay values that are determined for only one of said plurality of delay profiles; and selecting from the pre-selected and ranked peak delay values a peak delay value for each finger of the RAKE unit, such that the selected peak delay values are those having the highest ranks.

By ranking peaks that can be found in more than one delay profile higher than those that only occur in one of the delay profiles, true paths under fading are upgraded while noise peaks that only occur randomly are downgraded. In this way it is possible to select true peaks for the RAKE, even during fading, while noise peaks are suppressed, which leads to better performance of the RAKE in time critical situations.

The step of calculating a plurality of delay profiles may further comprise the steps of calculating a first delay profile from a first set of received pilot signals and determining delay values for peaks detected in said first delay profile; and calculating a second delay profile from a second set of received pilot signals, said second set of pilot signals being received after said first set of pilot signals, and determining delay values for peaks detected in said second delay profile.

Further, the pre-selected peak delay values may be pre-selected among peak delay values determined for one of said plurality of delay profiles.

When the method further comprises the steps of calculating said second delay profile with a higher resolution than said first delay profile; and pre-selecting peak delay values among the peak delay values determined for said second delay profile, the peak delay values can be determined more precisely, because they are based on the delay profile having the best resolution.

In some embodiments the step of ranking the pre-selected peak delay values further comprises the step of dividing the pre-selected peak delay values into a first group and a second group, wherein peak delay values in said first group are given higher ranks than peak delay values in said second group. The step of ranking the pre-selected peak delay values may then further comprise the step of ranking in each of said first and second groups the pre-selected peak delay values according to a signal level of the corresponding peaks, such that higher peaks are given higher ranks. In this way it is ensured that a higher peak is more likely to be selected for the RAKE than a lower peak.

The pre-selected peak delay values may be divided into groups in such a way that peak delay values that are determined for more than one of said plurality of delay profiles are placed in said first group, while peak delay values that are determined for only one of said plurality of delay profiles are placed in said second group. This ensures that a peak determined for only one of the groups is always placed in the second group independent of its signal level. Alternatively, the pre-selected peak delay values may be divided into groups in such a way that the peak delay value representing the peak having the highest signal level is placed in said first group, and that for the remaining peak delay values, peak delay values that are determined for more than one of said plurality of delay profiles are placed in said first group, while peak delay values that are determined for only one of said plurality of delay profiles are placed in said second group. By always placing the strongest peak in the first group, this peak will always be delivered to the RAKE. This may be advantageous because it seems unlikely that the strongest peak should be a noise peak. If it is not determined for the other delay profile it more likely that there has been a sudden change in the transmission channel, and thus it would be better to include this strong peak.

As mentioned, the invention further relates to a receiver for digital data symbols sent from a transmitter through a transmission channel of a communications network, in which individual multipath components of a transmitted data symbol are received with individual delays, the receiver comprising a RAKE unit having a number of fingers for processing received signals. When the receiver is arranged to calculate a plurality of delay profiles from a respective plurality of sets of received pilot signals and for each of the plurality of delay profiles determine delay values for peaks detected in the delay profile; pre-select a number of peak delay values among the peak delay values determined for at least one of said plurality of delay profiles, said number of pre-selected delay values being larger than the number of fingers for said RAKE unit; rank the pre-selected peak delay values in dependence of whether they are determined for more than one of said plurality of delay profiles, so that for at least some of the peak delay values a higher rank is given to peak delay values that are determined for more than one of said plurality of delay profiles than to peak delay values that are determined for only one of said plurality of delay profiles; and select from the pre-selected and ranked peak delay values a peak delay value for each finger of the RAKE unit, such that the selected peak delay values are those having the highest ranks, a receiver is provided, which can improve the ability of selecting the true path delays, even when they are under fading and suppressing strong noise peaks also in time critical processes, where filtering of the delay profiles over several frames is not possible.

The receiver may further be arranged to calculate the plurality of delay profiles by calculating a first delay profile from a first set of received pilot signals and determining delay values for peaks detected in said first delay profile; and calculating a second delay profile from a second set of received pilot signals, said second set of pilot signals being received after said first set of pilot signals, and determining delay values for peaks detected in said second delay profile.

Further, the receiver may be arranged to pre-select the pre-selected peak delay values among peak delay values determined for one of said plurality of delay profiles.

When the receiver is further arranged to calculate said second delay profile with a higher resolution than said first delay profile; and pre-select peak delay values among the peak delay values determined for said second delay profile, the peak delay values can be determined more precisely, because they are based on the delay profile having the best resolution.

In some embodiments the receiver is further arranged to rank the pre-selected peak delay values by dividing the pre-selected peak delay values into a first group and a second group, wherein peak delay values in said first group are given higher ranks than peak delay values in said second group. The receiver may then further be arranged to rank the pre-selected peak delay values by ranking in each of said first and second groups the pre-selected peak delay values according to a signal level of the corresponding peaks, such that higher peaks are given higher ranks. In this way it is ensured that a higher peak is more likely to be selected for the RAKE than a lower peak.

The receiver may further be arranged to divide the pre-selected peak delay values into groups in such a way that peak delay values that are determined for more than one of said plurality of delay profiles are placed in said first group, while peak delay values that are determined for only one of said plurality of delay profiles are placed in said second group. This ensures that a peak determined for only one of the groups is always placed in the second group independent of its signal level. Alternatively, the receiver may be arranged to divide the pre-selected peak delay values into groups in such a way that the peak delay value representing the peak having the highest signal level is placed in said first group, and that for the remaining peak delay values, peak delay values that are determined for more than one of said plurality of delay profiles are placed in said first group, while peak delay values that are determined for only one of said plurality of delay profiles are placed in said second group. By always placing the strongest peak in the first group, this peak will always be delivered to the RAKE. This may be advantageous because it seems unlikely that the strongest peak should be a noise peak. If it is not determined for the other delay profile it more likely that there has been a sudden change in the transmission channel, and thus it would be better to include this strong peak.

In some embodiments, the receiver may be a WCDMA receiver.

The invention also relates to a computer program and a computer readable medium with program code means for performing the method described above.

### Brief Description of the Drawings

The invention will now be described more fully below with reference to the drawings, in which
figure 1 shows an example of multiple paths between a base station and a mobile station,
figure 2 shows a delay profile for the paths illustrated in figure 1,
figure 3 shows a sampled delay profile corresponding to the profile shown in figure 2,
figure 4 illustrates the use of a path searcher in combination with a RAKE receiver,
figure 5 shows a sampled delay profile with a low resolution and a subsequent sampled delay profile with a higher resolution,
figure 6 shows a flow chart illustrating an embodiment for selecting delay values according to the invention,
figure 7 shows vectors representing peaks from the delay profiles of figure 5, and
figure 8 shows an example of how a target vector is being formed according to the flow chart of figure 6.

### Detailed Description of Embodiments

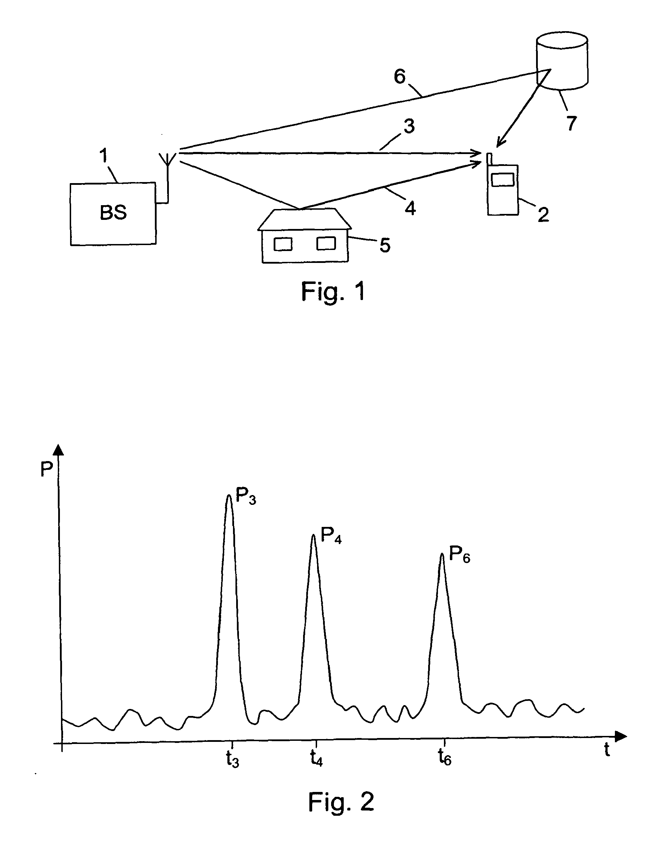

Figure 1 shows a situation in which a base station 1 and a mobile station 2 of a wireless communications system communicate with each other. As an example, a signal transmitted from the base station 1 is received by the mobile station 2. However, the transmitted signal travels along multiple paths from the base station to the mobile station. In this case there is a direct and unobstructed propagation path 3, but in addition to this direct path, reflections from objects in the surroundings cause a number of indirect paths to exist. Two such paths are shown in the figure. One indirect path 4 is reflected from a house 5, while another path 6 is caused by reflection from another building 7.

Since the part of a signal transmitted via one of the indirect paths 4 and 6 has to travel a longer distance to arrive at the mobile station 2, compared to the part of the signal travelling via the direct path 3, multiple instances of the same signal will be received by the mobile station 2 at different times, i.e. with different delays.

Thus, if a pilot signal is transmitted from the base station 1, the power P received at the mobile station 2 as a function of the time t may look as illustrated in figure 2, which shows an example of a power delay profile. The power delay profile shows all signals received at the mobile station, including noise and interference signals. However, only the peaks in the power delay profile correspond to the multipath components of the transmitted signal. Together these peaks form the impulse response of the channel. In figure 2 the peak P₃ received at the time t₃ corresponds to the direct path 3 in figure 1, while the peaks P₄ and P₆ received at the times t₄ and t₆, respectively, correspond to the indirect paths 4 and 6 in figure 1. Thus, as an example, it is seen that the delay of the path 6 (corresponding to the peak P₆) is larger than the delay of the path 3 (corresponding to the peak P₃).

The delay profile shown in figure 2 is an instantaneous delay profile, and in such profiles noise peaks often occur in addition to the peaks representing the true peaks. Further, peaks representing true paths may momentarily fade, e.g. due to negative interference in the channel. Thus the true paths are not necessarily identical to the highest peaks in the instantaneous delay profile. However, the true paths typically have stable delay values for some time, while the noise peaks occur randomly. Therefore, the instantaneous delay profiles are normally filtered over a number of transmission frames in order to decrease the effect of the noise peaks.

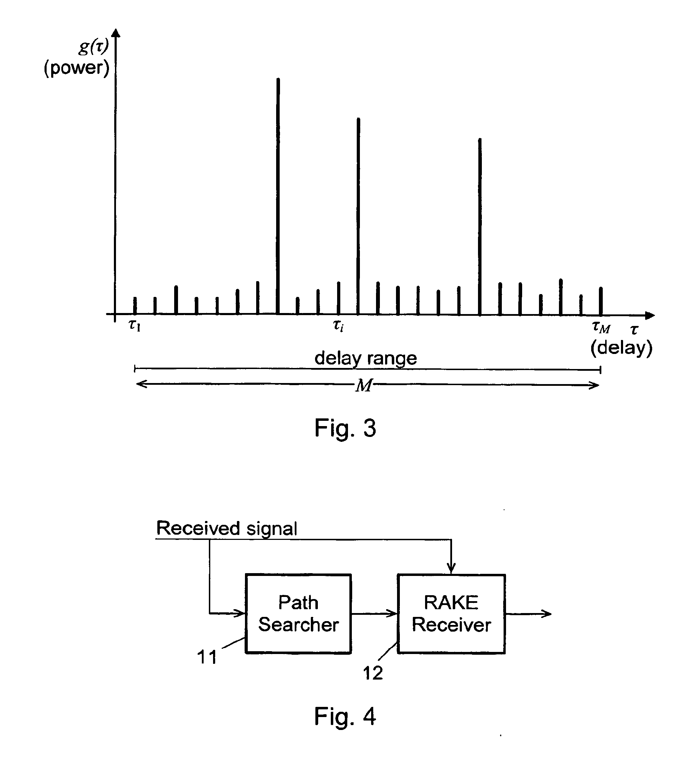

Typically, the delay profile of the received signal will not be available as a continuous curve as the one illustrated in figure 2. Instead, it will consist of a number of sample values. This is illustrated in figure 3, which shows a sampled power delay profile corresponding to the continuous delay profile shown in figure 2. For each delay value *τᵢ* (where *i* ∈ [1,*M*], i.e. the full possible delay range), the corresponding power value *g(τᵢ)* is shown. In this case the available estimates of the power delay profile constitutes a contiguous sequence of equally spaced samples, τ*ᵢ* = τ₀ + *iΔτ*.

The mobile station 2 and the base station 1 may be adapted for use in e.g. a Code Division Multiple Access (CDMA) system or a Wideband Code Division Multiple Access (WCDMA) system, and in that case the mobile station 2 may use a RAKE receiver, which is capable of identifying and tracking the various multipath signals for a given channel. In this way the energy or power of several multipath components can be utilized in the receiver. In the RAKE receiver each multipath component is assigned a despreader whose reference copy of the spreading code is delayed equally to the path delay of the corresponding multipath component. The outputs of the despreaders, i.e. the fingers of the RAKE receiver, are then coherently combined to produce a symbol estimate. Thus the RAKE receiver requires knowledge of the multipath delays and the values of the channel impulse response for all paths. The signal energy from as many physical paths as possible should be collected. This knowledge can be obtained from the delay profiles.

Although reference is here made to a RAKE receiver in a mobile station, it should be noted that the algorithms described below may be used at any CDMA receiver, i.e. in a mobile station or a base station, and the transmission may be uplink or downlink.

Since the structure of the propagation channel does not remain constant over time, the delays of existing paths change, old paths disappear and new paths appear. The changing delays of all known multipath components should be tracked, and new paths should be discovered quickly after they appear. Therefore, infrequently activated limited-range path searchers are typically used for detecting new paths and, in some implementations, for re-detecting temporarily faded existing paths. This is illustrated in figure 4, in which a path searcher 11 is used in combination with a RAKE receiver 12.

The path searcher 11 is a device that periodically computes instantaneous impulse response estimates (complex or power) over a range of delays that is also called a path search window. The complex or power values for a given delay value may be estimated e.g. by correlating the received data for pilot symbols with an appropriately delayed copy of the spreading sequence. Since the path searcher 11 is mainly used only to detect the existence of paths, its output resolution may be lower than that required by the RAKE receiver 12.

As mentioned, during normal reception of data the instantaneous delay profiles are typically filtered over a number of frames to reduce the effects of noise peaks and fading. However, in the CDMA systems there are also some time critical processes for which the filtering technique can not be used. Paging is an example of such a time critical process. Paging is the process where e.g. a base station seeks to get in contact with a passive user terminal. Most of the time the passive user terminal is in a sleep mode, and only from time to time it wakes up from the sleep mode to check if a paging signal for that terminal is present. During this short time the device has to find the delays of the paths in the transmission channel, perform e.g. automatic frequency corrections and paging indicator detections, and if a Paging Indicator (PI) is actually detected for the device it will decode the information on the Paging Channel (PCH), which e.g. in a 3GPP network is transmitted on the Secondary Common Control Physical Channel (S-CCPCH). The available time for path detection during the wake-up period does not allow the use of filtering as described above, and since the time intervals between the wake-up events are rather long, the delay profiles measured during different wake-up periods are typically not sufficiently correlated to be used for filtering. In this situation the method described below can be used to reduce the effects of noise peaks and fading. It will be understood, though, that the embodiments of the invention are also applicable to other situations, when filtering is possible but not desirable.

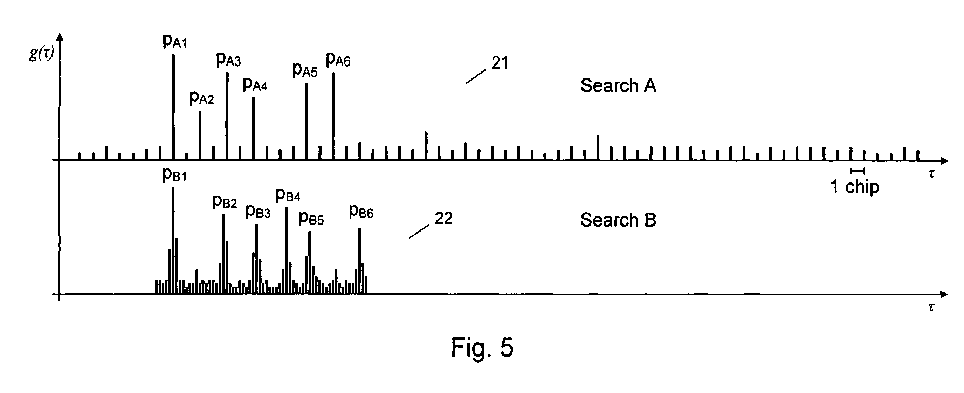

The first step in estimating the true path delays during a wake-up period is to perform a coarse path search of an instantaneous delay profile over a delay range of e.g. 128 chips with a resolution of e.g. one chip. In the upper part of figure 5 is for illustrational purposes shown an instantaneous delay profile 21 with a delay range of 64 chips with a resolution of e.g. one chip. In this example the coarse path searcher (Search A) will find six peaks, i.e. p_{A1}, p_{A2}, p_{A3}, p_{A4}, p_{A5} and p_{A6}, some of which may represent true paths, while others may represent noise peaks. The purpose of this coarse path search is to find the regions of the strongest paths, and the results are used to do the automatic frequency corrections and to perform a new and finer path search, i.e. a path search having a finer resolution, of a new instantaneous delay profile. In a practical implementation this finer path search could for example have a coverage of 32 chips with a resolution of a quarter chip. In the lower part of figure 5 a finer instantaneous delay profile 22 covering 16 chips with a resolution of a quarter chip and corresponding to the delay profile of the upper part of the figure is shown. The fine path search (Search B) now finds the six peaks p_{B1}, p_{B2}, p_{B3}, p_{B4}, p_{B5} and p_{B6}.

Due to the better resolution of Search B this search gives a better estimation of the delay values, and thus it is better to use these values, or some of them, by the RAKE unit and the channel estimators for detecting the Paging Indicator and decoding the Paging Channel instead of those obtained from Search A. However, it can be seen by comparing the upper and lower part of figure 5 that peaks p_{B1}, p_{B2}, p_{B3} and p_{B5} correspond to peaks p_{A1}, p_{A3}, p_{A4} and p_{A5}, and thus these peaks can be expected to represent true paths, since they have at least been stable for the time between capturing the two delay profiles. On the other hand, peaks p_{A2}, p_{A6}, p_{B4} and p_{B6} only occur in one of the profiles, and thus they are more likely to be noise peaks. If for instance the three highest peaks from Search B were used for the RAKE, p_{B1}, p_{B2} and p_{B4} would be selected with the consequence that the noise peak p_{B4} would be included instead of p_{B3} or p_{B5} that represent true paths, and such a loss of true paths and involvement of noise peaks lead to degradations of the paging performance.

One of the fundamental differences between true paths and noise peaks is that the former have stable delay values over time, while the latter occur randomly. Therefore the true delays are those which can be detected repeatedly or appear and last for some period of time, while the noise peaks appear and disappear from measurement to measurement. As mentioned, filtered delay profiles are not available for the time-critical events, but it is possible keep track of the delay values of the strong paths between the few calculated delay profiles, such as those shown as Search A and Search B in figure 5, and then re-arrange the significances of the paths in an instantaneous delay profile accordingly. Thus instead of using the highest peaks from Search B, these peaks can be re-arranged by assigning a higher priority to the peaks that are also known from Search A.

According to an illustrative embodiment, which is described below, the strongest path is always selected no matter whether it is a known path or an emerging path. Then a desired number of strong paths are chosen from the instantaneous power profile, i.e. Search B, as the candidates, and they are divided into two groups. The number of the delay candidates should be larger than the typical number of the multipaths or RAKE fingers, yet much smaller than the possible delay values of the path searchers so that as many true paths as possible, yet as few noise peaks as possible are involved in this process. The higher prioritised group contains the paths that were also known from Search A and it is placed closer to the strongest path, while the lower prioritised one consists of the emerging paths and is placed farther away. In each of the groups, the delays with higher power values have higher priority to be delivered to the RAKE etc. It can here be noted that comparing paths detected by the path searchers even with different resolutions is unambiguous in the way that one can identify a path as a known path if its delay to a previous one differs by less than or equal to a pre-defined value, e.g. +/½ chip.

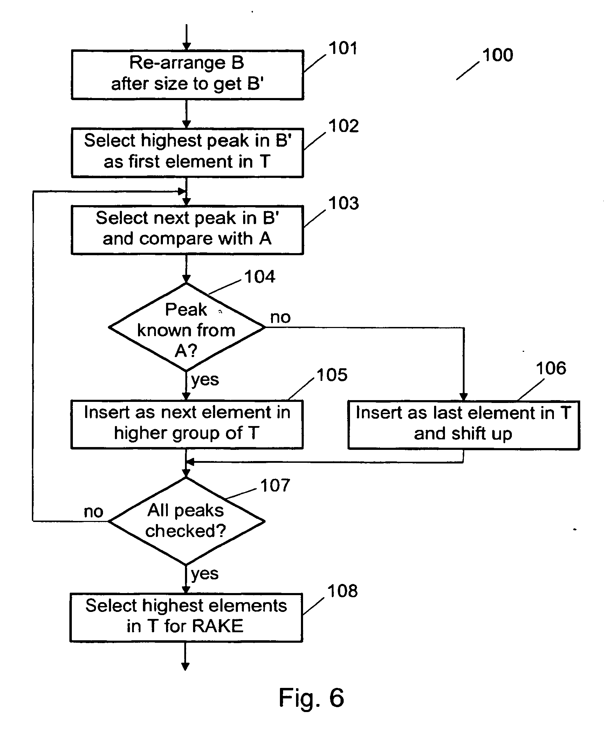

A flowchart 100 of a possible implementation of this approach is shown in figure 6. An initial vector B contains the delay candidates directly from the instantaneous power profile at hand, i.e. Search B, and a target vector T is formed by the delay candidates with the desired order ready to be delivered to the RAKE etc.

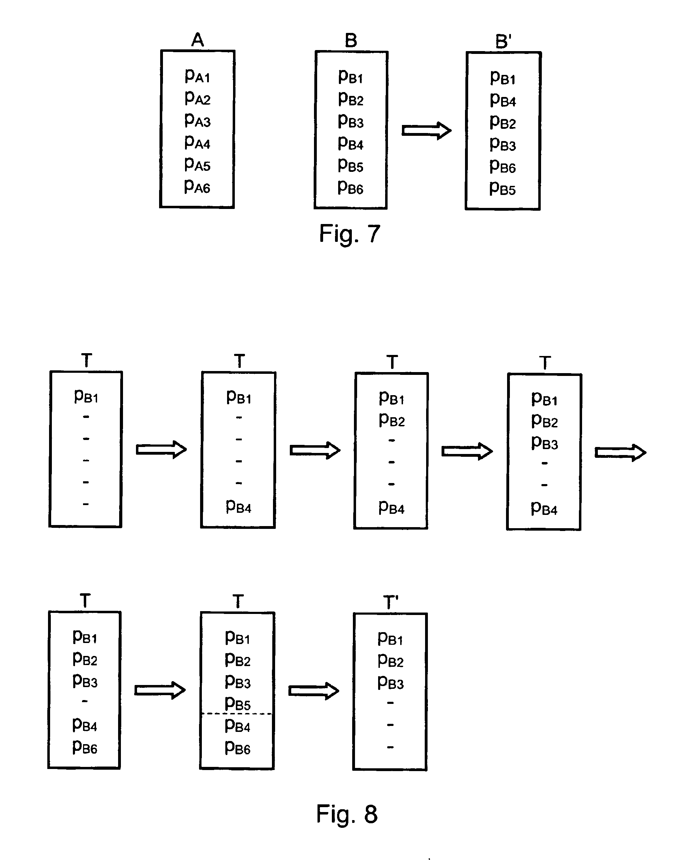

First, in step 101 the peaks of the vector B are re-arranged according to their size so that the highest peaks are placed at the top of the re-arranged vector B'. Figure 7 shows the original vectors A and B representing the peaks from Search A and Search B, respectively, and the re-arranged vector B'. In step 102 the delay of the strongest peak is inserted as the first element in the target vector T, which has the same dimension as the initial vector B' of the candidate delays. In figure 8 it is illustrated that the strongest peak p_{B1} is inserted as the first element in the vector T.

The value of the next delay candidate from B' is then in steps 103 and 104 read and compared with vector A showing the delays from the previous search, i.e. Search A. If the peak is known from A it is inserted (in step 105) as the next element in the higher prioritized group of the target vector T, i.e. directly after the previously inserted elements in that group. If, however, the next peak is not known from A it is inserted (in step 106) as the last element of the target vector T, while the previously inserted elements in the lower prioritized group, if any, are shifted one step upwards. If there still remain candidates (step 107), step 103 and the following steps are repeated until all elements of vector B' have been processed. Finally, in step 108 a number of the highest elements in the target vector T corresponding to the number of RAKE fingers, starting from the highest prioritized element are selected and delivered to the RAKE and the channel estimator.

Figure 8 shows as an example how the target vector T is being formed when the peaks from figure 5 are used. First, as mentioned above, the strongest peak p_{B1} is inserted as the first element. The next peak in B' is p_{B4}, and since this peak is not known from A it is inserted as the last element in T. Peaks p_{B2} and p_{B3}, which are both known from A, are then inserted after p_{B1}. Then p_{B6}, which is not known from A, is inserted as the last element in T, while p_{B4} is shifted one step up. Finally p_{B5} is inserted after p_{B3}, because it is also known from A. Vector T is now complete with elements p_{B1}, p_{B2}, p_{B3} and p_{B5} in the higher prioritized group and elements p_{B4} and p_{B6} in the lower prioritized group. The three highest elements p_{B1}, p_{B2} and p_{B3} are then selected as the vector T' to be delivered to the RAKE, because in this example the RAKE is assumed to have three fingers.

It is noted that step 101 is optional, since embodiments where no sorting is done are also possible, i.e. no vector B' is created. Instead, in each iteration the vector B may be searched for the largest peak not yet processed.

Above, vector A comprises the peaks detected during a first coarse path search, while vector B comprises the peaks detected during a subsequent finer path search, i.e. a search having a higher resolution. The target vector T is obtained from vector B by giving a higher priority to the peaks that are also known from vector A. Although this gives a more precise determination of the delay values because the peaks in vector B are determined with a higher resolution, it is of course also possible to obtain the target vector T from vector A by giving a higher priority to the peaks that are also known from vector B. The idea is that peaks that occur in both searches are given a higher priority than those occurring in only one of the two searches.

In the embodiment described above, the delay of the strongest peak is inserted in step 102 as the first element in the target vector T, even if the peak should not be known from the first search, i.e. from vector A. This is done because it seems unlikely that the strongest peak should be a noise peak. If it is not known from the first search it is more likely that there has been a sudden change in the transmission channel, and thus it would be better to include this strong peak. However, step 102 may of course also be omitted, so that all peaks of vector B' are compared to vector A and placed in vector T in dependence of whether it is already known from vector A according to steps 103-106.

Further, instead of arranging the delay candidates in a target vector T they may be given a priority value in other ways according to the same principles, and then the delay candidates to be used by the RAKE can be selected based on the priority values.

Instead of pre-selecting only peak delay values from the peak delay values determined for one of the delay profiles, one might perform the pre-selection of peak delay values from the union of peak delay values determined for both the first and second delay profiles, and give a higher rank to those peak delay values that appear in both delay profiles. One could also use three or more delay profiles (possibly with different resolution), where the pre-selection of peak delay values is made from the peak delay values determined for either one or several of the delay profiles. The ranking might then involve more than two groups. For example, the highest ranked group could comprise those peak delay values that are determined for all of the involved delay profiles, the second highest ranked group those peak delay values that are determined for all but one of the involved delay profiles, and so on.

## Claims

1. A method of receiving digital data symbols sent from a transmitter through a transmission channel of a communications network, in which individual multipath components of a transmitted data symbol are received with individual delays, and wherein received signals are processed by a RAKE unit (12) having a number of fingers,
**characterized in that** the method comprises the steps of:
• calculating a plurality of delay profiles (21, 22) from a respective plurality of sets of received pilot signals, and for each of the plurality of delay profiles determining delay values for peaks detected in the delay profile;
• pre-selecting a number of peak delay values (p_{B1}, p_{B2}, p_{B3}, p_{B4}, p_{B5} and p_{B6}) among the peak delay values determined for at least one of said plurality of delay profiles, said number of pre-selected delay values being larger than the number of fingers for said RAKE unit (12);
• ranking the pre-selected peak delay values (p_{B1}, p_{B2}, p_{B3}, p_{B4}, p_{B5} and p_{B6}) in dependence of whether they are determined for more than one of said plurality of delay profiles, so that for at least some of the peak delay values a higher rank is given to peak delay values that are determined for more than one of said plurality of delay profiles than to peak delay values that are determined for only one of said plurality of delay profiles; and
• selecting from the pre-selected and ranked peak delay values a peak delay value for each finger of the RAKE unit (12), such that the selected peak delay values are those having the highest ranks.

2. A method according to claim 1, **characterized in that** the step of calculating a plurality of delay profiles further comprises the steps of:
• calculating a first delay profile (21) from a first set of received pilot signals and determining delay values for peaks detected in said first delay profile; and
• calculating a second delay profile (22) from a second set of received pilot signals, said second set of pilot signals being received after said first set of pilot signals, and determining delay values for peaks detected in said second delay profile.

3. A method according to claim 1 or 2, **characterized in that** the pre-selected peak delay values (p_{B1}, p_{B2}, p_{B3}, p_{B4}, p_{B5} and p_{B6}) are pre-selected among peak delay values determined for one of said plurality of delay profiles.

4. A method according to claim 2, **characterized in that** the method further comprises the steps of:
• calculating said second delay profile (22) with a higher resolution than said first delay profile (21); and
• pre-selecting peak delay values (P_{B1}, P_{B2}, P_{B3}, P_{B4}, p_{B5} and p_{B6}) among the peak delay values determined for said second delay profile (22).

5. A method according to any one of claims 1 to 4, **characterized in that** the step of ranking the pre-selected peak delay values (p_{B1}, P_{B2}, P_{B3}, p_{B4}, P_{B5} and P_{B6}) further comprises the step of dividing the pre-selected peak delay values into a first group and a second group, wherein peak delay values in said first group are given higher ranks than peak delay values in said second group.

6. A method according to claim 5, **characterized in that** the step of ranking the pre-selected peak delay values (p_{B1}, p_{B2}, p_{B3}, p_{B4}, p_{B5} and p_{B6}) further comprises the step of ranking in each of said first and second groups the pre-selected peak delay values according to a signal level of the corresponding peaks, such that higher peaks are given higher ranks.

7. A method according to claim 5 or 6, **characterized in that** the pre-selected peak delay values (p_{B1}, p_{B2}, p_{B3}, p_{B4}, p_{B5} and p_{B6}) are divided into groups in such a way that peak delay values that are determined for more than one of said plurality of delay profiles are placed in said first group, while peak delay values that are determined for only one of said plurality of delay profiles are placed in said second group.

8. A method according to claim 5 or 6, **characterized in that** the pre-selected peak delay values (P_{B1}, p_{B2}, P_{B3}, P_{B4}, P_{B5} and P_{B6}) are divided into groups in such a way that the peak delay value representing the peak having the highest signal level is placed in said first group, and that for the remaining peak delay values, peak delay values that are determined for more than one of said plurality of delay profiles are placed in said first group, while peak delay values that are determined for only one of said plurality of delay profiles are placed in said second group.

9. A receiver for digital data symbols sent from a transmitter through a transmission channel of a communications network, in which individual multipath components of a transmitted data symbol are received with individual delays, the receiver comprising a RAKE unit (12) having a number of fingers for processing received signals,
**characterized in that** the receiver is arranged to:
• calculate a plurality of delay profiles (21, 22) from a respective plurality of sets of received pilot signals, and for each of the plurality of delay profiles determine delay values for peaks detected in the delay profile;
• pre-select a number of peak delay values (P_{B1}, P_{B2}, P_{B3}, P_{B4}, p_{B5} and P_{B6}) among the peak delay values determined for at least one of said plurality of delay profiles, said number of pre-selected delay values being larger than the number of fingers for said RAKE unit;
• rank the pre-selected peak delay values (P_{B1}, p_{B2}, p_{B3}, P_{B4}, P_{B5} and p_{B6}) in dependence of whether they are determined for more than one of said plurality of delay profiles, so that for at least some of the peak delay values a higher rank is given to peak delay values that are determined for more than one of said plurality of delay profiles than to peak delay values that are determined for only one of said plurality of-delay profiles; and
• select from the pre-selected and ranked peak delay values a peak delay value for each finger of the RAKE unit (12), such that the selected peak delay values are those having the highest ranks.

10. A receiver according to claim 9, **characterized in that** the receiver is further arranged to calculate the plurality of delay profiles by:
• calculating a first delay profile (21) from a first set of received pilot signals and determining delay values for peaks detected in said first delay profile; and
• calculating a second delay profile (22) from a second set of received pilot signals, said second set of pilot signals being received after said first set of pilot signals, and determining delay values for peaks detected in said second delay profile.

11. A receiver according to claim 9 or 10, **characterized in that** the receiver is further arranged to pre-select the pre-selected peak delay values (p_{B1}, p_{B2}, p_{B3}, p_{B4}, p_{B5} and p_{B6}) among peak delay values determined for one of said plurality of delay profiles.

12. A receiver according to claim 10, **characterized in that** the receiver is further arranged to:
• calculate said second delay profile (22) with a higher resolution than said first delay profile (21); and
• pre-select peak delay values (p_{B1}, p_{B2}, p_{B3}, p_{B4}, p_{B5} and p_{B6}) among the peak delay values determined for said second delay profile (22).

13. A receiver according to any one of claims 9 to 12, **characterized in that** the receiver is further arranged to rank the pre-selected peak delay values (P_{B1}, P_{B2}, P_{B3}, P_{B4}, p_{B5} and p_{B6}) by dividing the pre-selected peak delay values into a first group and a second group, wherein peak delay values in said first group are given higher ranks than peak delay values in said second group.

14. A receiver according to claim 13, **characterized in that** the receiver is further arranged to rank the pre-selected peak delay values (p_{B1}, p_{B2}, p_{B3}, p_{B4}, p_{B5} and p_{B6}) by ranking in each of said first and second groups the pre-selected peak delay values according to a signal level of the corresponding peaks, such that higher peaks are given higher ranks.

15. A receiver according to claim 13 or 14, **characterized in that** the receiver is further arranged to divide the pre-selected peak delay values (p_{B1}, p_{B2}, p_{B3}, p_{B4}, p_{B5} and p_{B6}) into groups in such a way that peak delay values that are determined for more than one of said plurality of delay profiles are placed in said first group, while peak delay values that are determined for only one of said plurality of delay profiles are placed in said second group.

16. A receiver according to claim 13 or 14, **characterized in that** the receiver is further arranged to divide the pre-selected peak delay values (P_{B1}, P_{B2}, P_{B3}, p_{B4}, p_{B5} and P_{B6}) into groups in such a way that the peak delay value representing the peak having the highest signal level is placed in said first group, and that for the remaining peak delay values, peak delay values that are determined for more than one of said plurality of delay profiles are placed in said first group, while peak delay values that are determined for only one of said plurality of delay profiles are placed in said second group.

17. A receiver according to any one of claims 9 to 16, **characterized in that** the receiver is a WCDMA receiver.

18. A computer program comprising program code means for performing the steps of any one of the claims 1 to 8 when said computer program is run on a computer.

19. A computer readable medium having stored thereon program code means for performing the method of any one of the claims 1 to 8 when said program code means is run on a computer.

## Patentansprüche

1. Verfahren zum Empfangen digitaler Datensymbole, die von einem Sender durch einen Übertragungskanal eines Kommunikationsnetzwerks gesendet werden, in dem individuelle Mehrfachweg-Komponenten eines übertragenen Datensymbols mit individuellen Verzögerungen empfangen werden, und in dem empfangene Signale durch eine RAKE-Einheit (12) mit einer Anzahl von Fingern verarbeitet werden,
**dadurch gekennzeichnet, dass** das Verfahren die Schritte umfasst:
Berechnen einer Vielzahl von Verzögerungsprofilen (21, 22) aus einer jeweiligen Vielzahl von Sätzen empfangener Pilotsignale, und für jedes der Vielzahl von Verzögerungsprofilen, ein Bestimmen von Verzögerungswerten für in dem Verzögerungsprofil erfasste Spitzen;
Vorauswählen einer Anzahl von Spitzen-Verzögerungswerten (p_{B1}, p_{B2}, p_{B3}, p_{B4}, p_{B5} und p_{B6}) unter den Spitzen-Verzögerungswerten, die für zumindest eines der Vielzahl von Verzögerungsprofilen bestimmt sind, wobei die Anzahl vorausgewählter Verzögerungswerte größer ist, als die Anzahl von Fingern für die RAKE-Einheit (12);
Einstufen der vorausgewählten Spitzen-Verzögerungswerte (P_{B1}, P_{B2}, P_{B3}, P_{B4}, P_{B5} und p_{B6}) in Abhängigkeit davon, ob sie für mehr als eines der Vielzahl von Verzögerungsprofilen bestimmt sind, so dass für zumindest einige der Spitzen-Verzögerungswerte eine höhere Rangordnung vergeben wird an Spitzen-Verzögerungswerte, die für mehr als eines der Vielzahl von Verzögerungsprofilen bestimmt sind, als an Spitzen-Verzögerungswerte, die nur für eines der Vielzahl von Verzögerungsprofilen bestimmt sind; und
Auswählen aus den vorausgewählten und eingestuften Spitzen-Verzögerungswerten eines Spitzen-Verzögerungswertes für jeden Finger der RAKE-Einheit (12), so dass die ausgewählten Spitzen-Verzögerungswerte jene mit der höchsten Rangordnung sind.

2. Verfahren nach Anspruch 1, **dadurch gekennzeichnet, dass** der Schritt zum Berechnen einer Vielzahl von Verzögerungsprofilen ferner die Schritte umfasst:
Berechnen eines ersten Verzögerungsprofils (21) aus einem ersten Satz empfangener Pilotsignale und Bestimmen von Verzögerungswerten für die in dem ersten Verzögerungsprofil erfassten Spitzen; und
Berechnen eines zweiten Verzögerungsprofils (22) aus einem zweiten Satz empfangener Pilotsignale, wobei der zweite Satz Pilotsignale nach dem ersten Satz Pilotsignale empfangen wird, und Bestimmen von Verzögerungswerten für die in dem zweiten Verzögerungsprofil erfassten Spitzen.

3. Verfahren nach Anspruch 1 oder 2, **dadurch gekennzeichnet, dass** die vorausgewählten Spitzen-Verzögerungswerte (p_{B1}, P_{B2}, P_{B3}, P_{B4}, p_{B5} und P_{B6}) unter den Spitzen-Verzögerungswerten vorausgewählt werden, die für eines der Vielzahl von Verzögerungsprofilen bestimmt sind.

4. Verfahren nach Anspruch 2, **dadurch gekennzeichnet, dass** das Verfahren ferner die Schritte umfasst:
Berechnen des zweiten Verzögerungsprofils (22) mit einer höheren Auflösung als das erste Verzögerungsprofil (21); und
Vorauswählen von Spitzen-Verzögerungswerten (p_{B1}, p_{B2}, p_{B3}, p_{B4}, p_{B5} und p_{B6}) unter den Spitzen-Verzögerungswerten, die für das zweite Verzögerungsprofil (22) bestimmt sind.

5. Verfahren nach irgendeinem der Ansprüche 1 bis 4, **dadurch gekennzeichnet, dass** der Schritt zum Einstufen der vorausgewählten Spitzen-Verzögerungswerte (p_{B1}, p_{B2}, p_{B3}, p_{B4}, p_{B5} und p_{B6}) ferner den Schritt umfasst zum Aufteilen der vorausgewählten Spitzen-Verzögerungswerte in eine erste Gruppe und eine zweite Gruppe, wobei den Spitzen-Verzögerungswerten in der ersten Gruppe eine höhere Rangordnung gegeben wird als den Spitzen-Verzögerungswerten in der zweiten Gruppe.

6. Verfahren nach Anspruch 5, **dadurch gekennzeichnet, dass** der Schritt zum Einstufen der vorausgewählten Spitzen-Verzögerungswerte (p_{B1}, p_{B2}, p_{B3}, p_{B4}, p_{B5} und p_{B6}) ferner den Schritt umfasst zum Einstufen, in jeder der ersten und zweiten Gruppe, der vorausgewählten Spitzen-Verzögerungswerte nach einem Signalniveau der entsprechenden Spitzen, so dass höheren Spitzen eine höhere Rangordnung gegeben wird.

7. Verfahren nach Anspruch 5 oder 6, **dadurch gekennzeichnet, dass** die vorausgewählten Spitzen-Verzögerungswerte (p_{B1}, p_{B2}, p_{B3}, p_{B4}, p_{B5} und p_{B6}) in Gruppen derart aufgeteilt werden, dass Spitzen-Verzögerungswerte, die für mehr als eines der Vielzahl von Verzögerungsprofilen bestimmt sind, in der ersten Gruppe platziert werden, während Spitzen-Verzögerungswerten, die nur für eins der Vielzahl von Verzögerungsprofilen bestimmt sind, in der zweiten Gruppe platziert werden.

8. Verfahren nach Anspruch 5 oder 6, **dadurch gekennzeichnet, dass** die vorausgewählten Spitzen-Verzögerungswerte (p_{B1}, P_{B2}, p_{B3}, P_{B4}, p_{B5} und P_{B6}) in Gruppen derart aufgeteilt werden, dass der Spitzen-Verzögerungswert, der die Spitze mit dem höchsten Signalniveau repräsentiert, in der ersten Gruppe platziert wird, und dass für die übrigen Spitzen-Verzögerungswerte die Spitzen-Verzögerungswerte, die für mehr als eines der Vielzahl von Verzögerungsprofilen bestimmt sind, in der ersten Gruppe platziert werden, während Spitzen-Verzögerungswerte, die nur für eines der Vielzahl von Verzögerungsprofilen bestimmt sind, in der zweiten Gruppe platziert werden.

9. Empfänger digitaler Datensymbole, die von einem Sender durch einen Kanal eines Kommunikationsnetzwerks gesendet werden, in dem individuelle Mehrfachweg-Komponenten eines übertragenen Datensymbols mit individuellen Verzögerungen empfangen werden, wobei der Empfänger eine RAKE-Einheit (12) mit einer Anzahl von Fingern zum Bearbeiten der empfangenen Signale umfasst,
**dadurch gekennzeichnet, dass** der Empfänger ausgelegt ist zum:
Berechnen einer Vielzahl von Verzögerungsprofilen (21, 22) aus einer jeweiligen Vielzahl von Sätzen empfangener Pilotsignale, und für jedes der Vielzahl von Verzögerungsprofilen, zum Bestimmen von Verzögerungswerten für in dem Verzögerungsprofil erfasste Spitzen;
Vorauswählen einer Anzahl von Spitzen-Verzögerungswerten (p_{B1}, p_{B2}, P_{B3}, P_{B4}, p_{B5} und P_{B6}) unter den Spitzen-Verzögerungswerten, die für zumindest eines der Vielzahl von Verzögerungsprofilen bestimmt sind, wobei die Anzahl vorausgewählter Verzögerungswerte größer ist, als die Anzahl von Fingern der Rake-Einheit;
Einstufen der vorausgewählten Spitzen-Verzögerungswerte (p_{B1}, P_{B2}, P_{B3}, P_{B4}, p_{B5} und P_{B6}) in Abhängigkeit davon, ob sie für mehr als eines der Vielzahl von Verzögerungsprofilen bestimmt sind, so dass für zumindest einige der Spitzen-Verzögerungswerte eine höhere Rangordnung vergeben wird an Spitzen-Verzögerungswerte, die für mehr als eines der Vielzahl von Verzögerungsprofilen bestimmt sind, als an Spitzen-Verzögerungswerte, die nur für eines der Vielzahl von Verzögerungsprofilen bestimmt sind; und
Auswählen aus den vorausgewählten und eingestuften Spitzen-Verzögerungswerten eines Spitzen-Verzögerungswertes für jeden Finger der RAKE-Einheit (12), so dass die ausgewählten Spitzen-Verzögerungswerte jene mit den höchsten Rangordnungen sind.

10. Empfänger nach Anspruch 9, **dadurch gekennzeichnet, dass** der Empfänger ferner ausgelegt ist zum Berechnen der Vielzahl von Verzögerungsprofilen durch:
Berechnen eines ersten Verzögerungsprofils (21) aus einem ersten Satz empfangener Pilotsignale und Bestimmen von Verzögerungswerten für die in dem ersten Verzögerungsprofil erfassten Spitzen; und
Berechnen eines zweiten Verzögerungsprofils (22) aus einem zweiten Satz empfangener Pilotsignale, wobei der zweite Satz Pilotsignale nach dem ersten Satz Pilotsignale empfangen wird, und Bestimmen von Verzögerungswerten für die in dem zweiten Verzögerungsprofil erfassten Spitzen.

11. Empfänger nach Anspruch 9 oder 10, **dadurch gekennzeichnet, dass** der Empfänger ferner ausgelegt ist zum Vorauswählen der vorausgewählten Spitzen-Verzögerungswerte (p_{B1}, p_{B2}, P_{B3}, p_{B4}, P_{B5} und p_{B6}) unter den Spitzen-Verzögerungswerten, die für eines der Vielzahl von Verzögerungsprofilen bestimmt sind.

12. Empfänger nach Anspruch 10, **dadurch gekennzeichnet, dass** der Empfänger ferner ausgelegt ist zum:
Berechnen des zweiten Verzögerungsprofils (22) mit einer höheren Auflösung als das erste Verzögerungsprofil (21); und
Vorauswählen von Spitzen-Verzögerungswerten (P_{B1}, p_{B2}, p_{B3}, p_{B4}, p_{B5} und p_{B6}) unter den Spitzen-Verzögerungswerten, die für das zweite Verzögerungsprofil (22) bestimmt sind.

13. Empfänger nach irgendeinem der Ansprüche 9 bis 12, **dadurch gekennzeichnet, dass** der Empfänger ferner ausgelegt ist zum Einstufen der vorausgewählten Spitzen-Verzögerungswerte (P_{B1}, P_{B2}, P_{B3}, P_{B4}, P_{B5} und p_{B6}) durch ein Aufteilen der vorausgewählten Spitzen-Verzögerungswerte in eine erste Gruppe und eine zweite Gruppe, wobei den Spitzen-Verzögerungswerten in der ersten Gruppe eine höhere Rangordnung als den Spitzen-Verzögerungswerten in der zweiten Gruppe gegeben wird.

14. Empfänger nach Anspruch 13, **dadurch gekennzeichnet, dass** der Empfänger ferner ausgelegt ist zum Einstufen der vorausgewählten Spitzen-Verzögerungswerte (p_{B1}, p_{B2}, p_{B3}, p_{B4}, p_{B5} und p_{B6}) durch ein Einstufen, in jeder der ersten und zweiten Gruppe, der vorausgewählten Spitzen-Verzögerungswerte nach einem Signalniveau der entsprechenden Spitzen, so dass den höheren Spitzen eine höhere Rangordnung gegeben wird.

15. Empfänger nach Anspruch 13 oder 14, **dadurch gekennzeichnet, dass** der Empfänger ferner ausgelegt ist zum Aufteilen der vorausgewählten Spitzen-Verzögerungswerte (p_{B1}, p_{B2}, P_{B3}, P_{B4}, p_{B5} und p_{B6}) in Gruppen, derart, dass Spitzen-Verzögerungswerte, die für mehr als eines der Vielzahl von Verzögerungsprofilen bestimmt sind, in die erste Gruppe platziert werden, während Spitzen-Verzögerungswerte, die nur für eines der Vielzahl von Verzögerungsprofilen bestimmt sind, in der zweiten Gruppe platziert werden.

16. Empfänger nach Anspruch 13 oder 14, **dadurch gekennzeichnet, dass** der Empfänger ferner ausgelegt ist zum Aufteilen der vorausgewählten Spitzen-Verzögerungswerte (p_{B1}, p_{B2}, P_{B3}, p_{B4}, p_{B5} und p_{B6}) in Gruppen, derart, dass der Spitzen-Verzögerungswert, der die Spitze mit dem höchsten Signalniveau repräsentiert, in der ersten Gruppe platziert wird, und dass für die übrigen Spitzen-Verzögerungswerte die Spitzen-Verzögerungswerte, die für mehr als eines der Vielzahl von Verzögerungsprofilen bestimmt sind, in die ersten Gruppe platziert werden, während Spitzen-Verzögerungswerte, die für nur eines der Vielzahl von Verzögerungsprofilen bestimmt sind, in der zweiten Gruppe platziert werden.

17. Empfänger nach irgendeinem der Ansprüche 9 bis 16, **dadurch gekennzeichnet, dass** der Empfänger ein WCDMA-Empfänger ist.

18. Computerprogramm, das eine Programm-Code-Einrichtung zum Durchführen der Schritte von irgendeinem der Ansprüche 1 bis 8 umfasst, wenn das Computerprogramm auf einem Computer läuft.

19. Computer-lesbares Medium, das darauf eine Programm-Code-Einrichtung gespeichert hat, zum Durchführen des Verfahrens nach irgendeinem der Ansprüche 1 bis 8, wenn die Programm-Code-Einrichtung auf einem Computer läuft.

## Revendications

1. Procédé de réception de symboles numériques de données émis par un émetteur via un canal de transmission d'un réseau de communication, dans lequel des composantes individuelles de trajets multiples d'un symbole de données émis sont reçues avec des retards individuels et dans lequel des signaux reçus sont traités par une unité en râteau (12) possédant un certain nombre de dents, **caractérisé en ce que** le procédé comprend les étapes consistant à :
calculer une pluralité de profils de retards (21, 22) à partir d'une pluralité d'ensembles respectifs de signaux pilotes reçus et, pour chacun des profils dans la pluralité de profils de retards, déterminer des valeurs de retards pour des pics détectés dans le profil de retards ;
pré-sélectionner un certain nombre de valeurs de retards de pics (p_{B1}, p_{B2}, p_{B3}, p_{B4}, p_{B5} et p_{B6}) parmi les valeurs de retards de pics déterminées pour au moins un profil dans ladite pluralité de profils de retards, ledit nombre de valeurs de retards pré-sélectionnées étant supérieur au nombre des dents de ladite unité en râteau (12) ;
classer les valeurs de retards de pics pré-sélectionnées (p_{B1}, P_{B2}, p_{B3}, P_{B4}, P_{B5} et P_{B6}) en fonction du fait qu'elles sont déterminées dans plus d'un profil dans ladite pluralité de profils de retards, si bien que, pour au moins certaines des valeurs de retards de pics, le classement donné aux valeurs de retards de pics qui sont déterminées dans plus d'un profil dans ladite pluralité de profils de retards est plus élevé que celui des valeurs de retards de pics qui ne sont déterminées que pour un seul profil dans ladite pluralité de profils de retards ; et
sélectionner parmi les valeurs de retards de pics pré-sélectionnées et classées une valeur de retard de pic pour chaque dent de l'unité en râteau (12), si bien que les valeurs de retards de pics sélectionnées sont celles qui ont les classements les plus élevés.

2. Procédé selon la revendication 1, **caractérisé en ce que** l'étape de calcul d'une pluralité de profils de retards comprend en outre les étapes consistant à :
calculer un premier profil de retards (21) à partir d'un premier ensemble de signaux pilotes reçus et déterminer des valeurs de retards pour des pics détectés dans ledit premier profil de retards ; et
calculer un second profil de retards (22) à partir d'un second ensemble de signaux pilotes reçus, ledit second ensemble de signaux pilotes étant reçu après ledit premier ensemble de signaux pilotes, et déterminer des valeurs de retards pour des pics détectés dans ledit second profil de retards.

3. Procédé selon la revendication 1 ou 2, **caractérisé en ce que** les valeurs de retards de pics pré-sélectionnées (p_{B1}, p_{B2}, p_{B3}, p_{B4}, p_{B5} et p_{B6}) sont pré-sélectionnées parmi des valeurs de retards de pics déterminées pour un profil dans ladite pluralité de profils de retards.

4. Procédé selon la revendication 2, **caractérisé en ce que** le procédé comprend en outre les étapes consistant à :
calculer ledit second profil de retards (22) avec une résolution supérieure à celle dudit premier profil de retards (21) ; et
pré-sélectionner des valeurs de retards de pics (p_{B1}, P_{B2}, P_{B3}, P_{B4}, p_{B5} et p_{B6}) parmi les valeurs de retards de pics déterminées pour ledit second profil de retards (22).

5. Procédé selon l'une quelconque des revendications 1 à 4, **caractérisé en ce que** l'étape de classement des valeurs de retards de pics pré-sélectionnées (p_{B1}, p_{B2}, p_{B3}, p_{B4}, p_{B5} et p_{B6}) comprend en outre l'étape consistant à diviser les valeurs de retards de pics pré-sélectionnées en un premier groupe et un second groupe, les valeurs de retards de pics dans ledit premier groupe ayant des classements supérieurs à ceux des valeurs de retards de pics dans ledit second groupe.

6. Procédé selon la revendication 5, **caractérisé en ce que** l'étape de classement des valeurs de retards de pics pré-sélectionnées (p_{B1}, p_{B2}, p_{B3}, p_{B4}, p_{B5} et p_{B6}) comprend en outre l'étape consistant à classer les valeurs de retards de pics pré-sélectionnées dans lesdits premier et second groupes en fonction d'un niveau de signal des pics correspondants, si bien que les pics plus élevés reçoivent des classements plus élevés.

7. Procédé selon la revendication 5 ou 6, **caractérisé en ce que** les valeurs de retards de pics pré-sélectionnées (p_{B1}, p_{B2}, P_{B3}, P_{B4}, P_{B5} et p_{B6}) sont divisées en groupes de telle manière que les valeurs de retards de pics qui sont déterminées dans plusieurs profils parmi ladite pluralité de profils de retards sont placées dans ledit premier groupe, tandis que des valeurs de retards de pics qui ne sont déterminées que pour un seul profil parmi ladite pluralité de profils de retards sont placées dans ledit second groupe.

8. Procédé selon la revendication 5 ou 6, **caractérisé en ce que** les valeurs de retards de pics pré-sélectionnées (p_{B1}, p_{B2}, p_{B3}, p_{B4}, p_{B5} et p_{B6}) sont divisées en groupes de telle manière que la valeur de retard de pic représentant le pic ayant le niveau de signal le plus élevé est placée dans ledit premier groupe et que, pour les valeurs de retards de pics restantes, les valeurs de retards de pics qui sont déterminées dans plusieurs profils parmi ladite pluralité de profils de retards sont placées dans ledit premier groupe, tandis que des valeurs de retards de pics qui ne sont déterminées que pour un seul profil parmi ladite pluralité de profils de retards sont placées dans ledit second groupe.

9. Récepteur de symboles numériques de données émis par un émetteur via un canal de transmission d'un réseau de communication, dans lequel des composantes individuelles de trajets multiples d'un symbole de données émis sont reçues avec des retards individuels et dans lequel des signaux reçus sont traités par une unité en râteau (12) possédant un certain nombre de dents pour traiter des signaux reçus, **caractérisé en ce que** le récepteur est conçu pour :
calculer une pluralité de profils de retards (21, 22) à partir d'une pluralité d'ensembles respectifs de signaux pilotes reçus et, pour chacun des profils dans la pluralité de profils de retards, déterminer des valeurs de retards pour des pics détectés dans le profil de retards ;
pré-sélectionner un certain nombre de valeurs de retards de pics (p_{B1}, p_{B2}, p_{B3}, P_{B4}, p_{B5} et P_{B6}) parmi les valeurs de retards de pics déterminées pour au moins un profil dans ladite pluralité de profils de retards, ledit nombre de valeurs de retards pré-sélectionnées étant supérieur au nombre des dents de ladite unité en râteau ;
classer les valeurs de retards de pics pré-sélectionnées (P_{B1}, P_{B2}, P_{B3}, P_{B4}, P_{B5} et P_{B6}) en fonction du fait qu'elles sont déterminées dans plus d'un profil dans ladite pluralité de profils de retards, si bien que, pour au moins certaines des valeurs de retards de pics, le classement donné aux valeurs de retards de pics qui sont déterminées dans plus d'un profil dans ladite pluralité de profils de retards est plus élevé que celui des valeurs de retards de pics qui ne sont déterminées que pour un seul profil dans ladite pluralité de profils de retards ; et
sélectionner parmi les valeurs de retards de pics pré-sélectionnées et classées une valeur de retard de pic pour chaque dent de l'unité en râteau (12), si bien que les valeurs de retards de pics sélectionnées sont celles qui ont les classements les plus élevés.

10. Récepteur selon la revendication 9, **caractérisé en ce que** le récepteur est en outre conçu pour calculer la pluralité de profils de retards :
en calculant un premier profil de retards (21) à partir d'un premier ensemble de signaux pilotes reçus et en déterminant des valeurs de retards pour des pics détectés dans ledit premier profil de retards ; et
en calculant un second profil de retards (22) à partir d'un second ensemble de signaux pilotes reçus, ledit second ensemble de signaux pilotes étant reçu après ledit premier ensemble de signaux pilotes, et en déterminer des valeurs de retards pour des pics détectés dans ledit second profil de retards.

11. Récepteur selon la revendication 9 ou 10, **caractérisé en ce que** le récepteur est en outre conçu pour pré-sélectionner les valeurs de retards de pics pré-sélectionnées (P_{B1}, P_{B2}, P_{B3}, P_{B4}, P_{B5} et P_{B6}) parmi des valeurs de retards de pics déterminées pour l'un des profils de ladite pluralité de profils de retards.

12. Récepteur selon la revendication 10, **caractérisé en ce que** le récepteur est en outre conçu pour :
calculer ledit second profil de retards (22) avec une résolution supérieure à celle dudit premier profil de retards (21) ; et
pré-sélectionner des valeurs de retards de pics (p_{B1}, p_{B2}, p_{B3}, p_{B4}, p_{B5} et p_{B6}) parmi les valeurs de retards de pics déterminées pour ledit second profil de retards (22).

13. Récepteur selon l'une quelconque des revendications 9 à 12, **caractérisé en ce que** le récepteur est en outre conçu pour classer les valeurs de retards de pics pré-sélectionnées (p_{B1}, p_{B2}, p_{B3}, p_{B4}, p_{B5} et p_{B6}) en divisant les valeurs de retards de pics pré-sélectionnées en un premier groupe et un second groupe, les valeurs de retards de pics dans ledit premier groupe ayant des classements supérieurs à ceux des valeurs de retards de pics dans ledit second groupe.

14. Récepteur selon la revendication 13, **caractérisé en ce que** le récepteur est en outre conçu pour classer les valeurs de retards de pics pré-sélectionnées (p_{B1}, p_{B2}, p_{B3}, p_{B4}, p_{B5} et p_{B6}) en classant les valeurs de retards de pics pré-sélectionnées dans lesdits premier et second groupes en fonction d'un niveau de signal des pics correspondants, si bien que les pics plus élevés reçoivent des classements plus élevés.

15. Récepteur selon la revendication 13 ou 14, **caractérisé en ce que** le récepteur est en outre conçu pour diviser les valeurs de retards de pics pré-sélectionnées (p_{B1}, p_{B2}, p_{B3}, p_{B4}, p_{B5} et p_{B6}) en groupes de telle manière que les valeurs de retards de pics qui sont déterminées dans plusieurs profils parmi ladite pluralité de profils de retards sont placées dans ledit premier groupe, tandis que des valeurs de retards de pics qui ne sont déterminées que pour un seul profil parmi ladite pluralité de profils de retards sont placées dans ledit second groupe.

16. Récepteur selon la revendication 13 ou 14, **caractérisé en ce que** le récepteur est en outre conçu pour diviser les valeurs de retards de pics pré-sélectionnées (p_{B1}, p_{B2}, p_{B3}, p_{B4}, p_{B5} et P_{B6}) en groupes de telle manière que la valeur de retard de pic représentant le pic ayant le niveau de signal le plus élevé est placée dans ledit premier groupe et que, pour les valeurs de retards de pics restantes, les valeurs de retards de pics qui sont déterminées dans plusieurs profils parmi ladite pluralité de profils de retards sont placées dans ledit premier groupe, tandis que des valeurs de retards de pics qui ne sont déterminées que pour un seul profil parmi ladite pluralité de profils de retards sont placées dans ledit second groupe.

17. Récepteur selon l'une quelconque des revendications 9 à 16, **caractérisé en ce que** le récepteur est un récepteur WCDMA.

18. Programme d'ordinateur comprenant des moyens de code de programme destinés à exécuter les étapes selon l'une quelconque des revendications 1 à 8 lorsque ledit programme d'ordinateur est exécuté sur un ordinateur.

19. Support lisible sur ordinateur portant des moyens de code de programme destinés à exécuter le procédé selon l'une quelconque des revendications 1 à 8 lorsque lesdits moyens de code de programme sont exécutés sur un ordinateur.
